# EUROPEAN PATENT SPECIFICATION

(11) **EP 2 418 963 B1**
(45) Date of publication and mention of the grant of the patent: **11.06.2014**
(21) Application number: 10716004.6
(22) Date of filing: 19.04.2010
(51) Int. Cl.: A23G 3/36, A23G 1/38, A23G 1/32

(54) **CHOCOLATE COMPOSITION**
SCHOKOLADE ZUSAMMENSETZUNG
COMPOSITION DE CHOCOLAT

(30) Priority: 17.04.2009 GB 0906662
(43) Date of publication of application: 22.02.2012
(73) Proprietor: Mondelez UK Holdings & Services Limited, Birmingham B30 2LU (GB)
(72) Inventor: WALES, Andrew, Leamington Spa Warwickshire CV32 6JJ (GB); BROWN, Anthony James, Thatcham Berkshire RG18 3HB (GB); CHILTON, Christopher, Birmingham West Midlands B30 2LU (GB); WINDER, Philip John, Woodseats Sheffield S8 0NL (GB); SAMANT, Shantanu, Mumbai, Maharashtra PIN 4000026 (IN); SRIRAM, K, 10th of Ramadan 44637 (EG)
(74) Representative: Ward, David Ian
(86) International application number: PCT/GB2010/000779
(87) International publication number: WO 2010/119268

(56) References cited:
- EP-A1- 0 716 810
- EP-A1- 1 992 232
- WO-A1-2008/064962
- GB-A- 2 201 878
- US-A1- 2004 086 615
- US-A1- 2007 014 904
- AFOAKWA ET AL: "Factors influencing rheological and textural qualities in chocolate - a review" TRENDS IN FOOD SCIENCE AND TECHNOLOGY, ELSEVIER SCIENCE PUBLISHERS, GB LNKD- DOI:10.1016/J.TIFS.2007.02.002, vol. 18, no. 6, 10 May 2007 (2007-05-10), pages 290-298, XP022069623 ISSN: 0924-2244

## Description

The invention relates to a chocolate composition and to a process for the manufacture of a chocolate composition.

Conventional milk chocolate is usually prepared from sugar, cocoa solids, cocoa butter and milk solids. Due to the high cost and the low melting point of cocoa butter there has been interest in replacing some or all of the cocoa butter in milk chocolate with cocoa butter substitutes (CBS, also known as cocoa butter replacers) or cocoa butter equivalents (CBE, fats having the same physical properties as cocoa butter where the constituent glycerides are not derived from the cocoa bean). Compositions containing predominantly CBS/CBE are often known as compound chocolates. They are commonly employed as coatings, particularly for products where a standard chocolate coating would not be suitable, for example, for coating ice-cream where a standard chocolate coating would be too brittle.

Document GB 2201878 discloses a chocolate coating composition comprising lauric fat and some whey.

An objective of the present invention is the provision of an improved chocolate composition.

According to a first aspect of the present invention there is provided a chocolate composition comprising 50-65w% sweetener, 25-30wt% cocoa butter substitute (CBS) and/or cocoa butter equivalent (CBE), 4-10wt non-fat cocoa solids, milk solids and from 0 to 2wt% cocoa butter, wherein at least 80wt% of the milk solids are constituted by whey.

The invention provides an alternative to conventional milk chocolate which achieves a good taste and texture profile at lower cost. Confectionery products comprising a composition in accordance with the invention can therefore be made available to a wider range of consumers than previously.

The whey must comprise whey protein. It will be understood that whey permeate, a whey product from which the proteins have been removed, is not whey within the context of the present invention.

Useful sources of whey include whey protein concentrate, whey protein isolate, whey protein hydrolysate or a combination thereof. The whey may be demineralised. The composition will typically be prepared from whey powder. Whey powders comprise whey protein, optionally together with other components such as lactose.

The presence of whey protein is thought to be beneficial to the taste and texture of the product. In a series of embodiments, the whey comprises at least 25wt%, at least 40wt%, at least 50wt%, at least 60wt%, at least 70% wt%, or at least 80wt% whey protein.

In a series of embodiments, at least 90wt%, at least 95wt% or 100wt% of the milk solids are constituted by whey.

When whey constitutes less than 100wt% of the milk solids, the remaining milk solids may be in the form of skimmed milk solids and/or full cream milk solids.

In a series of embodiments, the composition comprises from 5 to 25wt%, from 8 to 20wt% or from 10 to 15wt% whey.

The presence of non-fat cocoa solids lends the product the characteristic taste and colour of chocolate. In a series of embodiments, the composition comprises from 4 to 10wt%, from 4 to 8wt%, from 4 to 7wt%, from 4 to 6wt%, from 4 to 5wt%, from 5 to 8wt%, from 5 to 7wt% or from 5 to 6wt% non-fat cocoa solids. Cocoa powder may be employed to provide the non-fat cocoa solids in the composition, in which case it will be understood that the cocoa butter present in the cocoa powder contributes to the overall amount of cocoa butter in the composition. A typical cocoa powder may have a fat content of from 10-12wt%, so a recipe comprising 5wt% cocoa powder has approximately 4.4-4.5wt% non-fat cocoa solids.

Suitable sweeteners include sugars (e.g. sucrose, dextrose, glucose syrup solids, fructose, lactose, maltose or any combination thereof), sugar alcohols (e.g. erythritol, sorbitol, xylitol, mannitol, lactitol, isomalt, or any combination thereof), intense sweeteners (e.g. aspartame, acesulfame-k, cyclamates, saccharin, sucralose, neohesperidin, dihydrochalone, alitame, stena sweeteners, glycyrrhizin or any combination thereof) and any combination of sugars, sugar alcohols and intense sweeteners. In a certain embodiment the sweetener is sucrose.

In a series of embodiments the composition comprises from 50 to 65wt%, from 52 to 63wt%, from 52 to 58wt%, from 57 to 63wt%, from 50 to 55wt% sweetener, from 55 to 60wt% or from 60 to 65wt%.

In one embodiment, the composition comprises a CBE. CBEs are defined in Directive 2000/36/EC. Suitable CBEs include illipe, Borneo tallow, tengkawang, palm oil, sal, shea, kokum gurgi and mango kernel.

In another embodiment, the composition comprises a CBS. Suitable CBSs include CBS laurics and CBS non-laurics. CBS laurics are short-chain fatty acid glycerides. Their physical properties vary within the group but they all have triglyceride configurations that make them compatible with cocoa butter. Suitable CBS laurics include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS non-laurics include soya, cottonseed, peanut, rapeseed and corn (maize) oil.

In a further embodiment, the composition comprises a CBE and a CBS. In a series of embodiments the composition comprises from 25 to 30wt%, from 26 to 29wt% or from 27 to 28wt% CBS and/or CBE.

In a particular embodiment the composition comprises no more than 2wt% or no more than 1wt% cocoa butter.

In a specific embodiment the composition comprises 50-55wt% sweetener, 25-30wt% cocoa butter substitute, 10-15wt% demineralised whey, 4-8wt% non-fat cocoa solids and 0-2wt% cocoa butter.

In another specific embodiment the composition comprises 55-60wt% sweetener, 25-30wt% cocoa butter substitute, 5-10wt% demineralised whey, 4-8wt% non-fat cocoa solids and 0-2wt% cocoa butter.

In a further specific embodiment the composition comprises 60-65wt% sweetener, 25-30wt% cocoa butter substitute, 3-5wt% demineralised whey, 4-8wt% cocoa butter solids and 0-2wt% cocoa butter.

In order to improve the viscosity during processing of the composition, the composition will commonly comprise at least one emulsifier. Such emulsifiers include lecithin derived from soya bean, safflower, sunflower, corn etc., fractionated lecithins enriched with either phosphatidyl choline, phosphatidyl ethanolamine, phosphatidyl inositol; emulsifiers derived from oats, mono- and diglycerides and their tartaric esters, monosodium phosphate derivatives of mono- and diglycerides of edible fats and oils, sorbitan monostearate, polyoxyethylene sorbitan monostearate, hydroxylated lecithin, synthetic phospholipids such as ammonium phosphatides, polyglycerol polyricinoleate (PGPR), lactylated fatty acid esters of glycerol and propylene glycol, polyglycerol esters of fatty acids, citric acid esters of fatty acids, propylene glycol mono- and diesters of fats and fatty acids.

The composition may further comprise natural and/or synthetic flavourings, especially those traditionally associated with chocolate, such as vanilla, orange and mint.

Advantageously, the composition is suitable for use both as a moulded product and as a coating. In a particular embodiment, the composition enrobes a centre such as a wafer or a number of wafers to form a snack bar. In a further embodiment, the snack bar has a centre that comprises a number of wafers that are sandwiched together by a filling, e.g. a confectionery cream, between the wafers.

According to a second aspect of the present invention, there is provided a process for the manufacture of the chocolate composition of the first aspect comprising mixing at least a sweetener, a cocoa butter substitute and/or a cocoa butter equivalent, non-fat cocoa solids and milk solids to form a paste, and processing the paste to form the chocolate composition;
wherein at least 80wt% of the milk solids are constituted by whey.

In one embodiment the processing comprises the steps of adjusting the particle size of the paste to a predetermined range; and liquefying the paste whereby to effect flavour development

Typically the paste will be milled to a particle size having a d90 of from 5 to 65µm from 10 to 45µm, or from 15 to 30µm.

In certain embodiments, the liquefied composition is subjected to a tempering step.

The sweetener, non-fat cocoa solids, CBS/CBE and whey are as described for the first aspect of the invention.

An embodiment of the invention will now be described by way of example only.

### Examples

Chocolate compositions containing a cocoa butter substitute were prepared from the ingredients listed in the table below using the following method:

The dry ingredients (i.e. sugar, cocoa powder, whey powder and flavours) were mixed together for 10 minutes in a jacketed Hobart mixer at a temperature of 45 to 50°C. Fat (i.e. cocoa butter substitute, cocoa butter, emulsifiers) was added to the Hobart mixer to produce a consistent paste. The paste was roll refined to produce a refiner flake having a reduced particle size. The refiner flake was conched by mixing in a jacketed Hobart mixer at a temperature of 45 to 50°C for around 3 hours. Finally, the mixture was hand tempered and either moulded into bars or used to enrobe a wafer centre.

| **Ingredient (wt%)** | **Ex 1** | **Ex 2** | **Ex 3** | **Ex 4** | **Comp Ex 1** |
|---|---|---|---|---|---|
| Sugar (sucrose) | 52.45 | 52.45 | 57.45 | 62.45 | 52.45 |
| Cocoa butter substitute (PALKENA (RTM), a CBS non-lauric,supplied by Fuji Oil Co. Ltd, Japan) | 27.31 | 0 | 0 | 0 | 0 |
| Cocoa butter substitute (CHOKITA), a lauric based CBS supplied by Kamani Oil Industries, India) | 0 | 27.31 | 27.31 | 27.31 | 27.31 |
| Demineralised whey powder (comprising whey protein) | 14.00 | 14.00 | 9.00 | 4.00 | 0 |
| Skimmed milk powder | 0 | 0 | 0 | 0 | 14.00 |
| Cocoa powder | 5.00 | 5.00 | 5.00 | 5.00 | 5.00 |
| Cocoa butter | 0.50 | 0 | 0 | 0 | 0 |
| CBS fat for flavour block | 0 | 0.50 | 0.50 | 0.50 | 0.50 |
| Emulsifiers | 0.73 | 0.73 | 0.73 | 0.73 | 0.73 |
| Flavours | 0.03 | 0.03 | 0.03 | 0.03 | 0.03 |

Consumer research results identified that the compositions were found to be acceptable alternatives to a conventional milk chocolate. In addition, when each composition was used to enrobe a wafer centre, the resulting snack bar was found to be as well received as comparable snack bars on the market despite being produced at lower cost.

A study was carried out to determine the drivers of consumer acceptance in emerging markets and the following results were obtained:

| **Flavour** | **Priority No** |
|---|---|
| High milky, sweet | 1 |
| High vanilla | 1 |
| Low sour milk | 4 |
| Low condensed milk | 4 |
| Low wafer to choc. ratio | 5 |
| Not stale | 5 |
| Not burnt | 8 |
| Low caramel | 9 |

Hence high milky, sweet and vanilla flavours are considered to be the most important drivers in this market.

| **Texture** | **Priority No** |
|---|---|
| Fast melt rate | 2 |
| Waxy | 6 |
| Crispy, crumbly | 7 |
| Initial hardness | 7 |
| Not chewy | 7 |

Snack bars were prepared by enrobing a wafer centre with the compositions of Examples 2 to 4 and Comp Ex 1 and assessed together with other wafer products available on the market. The comparative samples were: Cadbury Product A (South Africa), Cadbury Product B (UK), Cadbury Product C (South Africa), Cadbury Product D (South Africa), Cadbury Product E (Russia), Cadbury Product F (India), Cadbury Product G (India), Competitor Product H (India), Competitor Product I (India), Competitor Product J (India) and Competitor Product K (India).

The samples were assessed by a panel of trained assessors for their flavour and texture. Results were collected via the Compusense data capture system (Compusense Five, Canada) and were analysed with QDATM software (Tragon) using analysis of variance (ANOVA). The Duncan minimum significant difference was calculated in order to determine for each attribute, those samples, which were significantly different (p<0.05). A Principal Component Analysis (PCA) was run in FIZZ (Biosystemes, France) to describe the main sensory differences between the samples.

| **Flavour** | **Target** | **Priority No** | **Summary of the significant differences** |
|---|---|---|---|
| High sweet | Cadbury Products B, C and D | 1 | There were no significant differences between Ex 3 and Ex 4, and Cadbury Products B, C and D in terms of sweetness. |
| High milky | Cadbury Products B, C and D | 1 | There were no significant differences between Ex 3, Ex 4, Comp Ex 1, and Cadbury Products B, C and D in terms of milky flavour. |
| High vanilla | Cadbury Product C | 1 | There were no significant differences between Ex 2 to 4, Comp Ex 1 and Cadbury Product C in terms of vanilla flavour. |
| Low sour milk | Competitor Products I and J | 4 | Ex 2 to 4 and Comp Ex 1 were significantly less sour milk than Cadbury Product C and were not significantly different to Competitor Products I and J in sour milk flavour. |
| Low condensed milk | Competitor Products I and J | 4 | Ex 2 to 4 and Comp Ex 1 are less condensed milk than Cadbury Product C and were not significantly different to Competitor Product I and J in condensed milk flavour. |
| Not stale | | 5 | There were no significant differences between Ex 2 to 4, Comp Ex 1 and Competitor Product H in terms of stale flavour. |
| Not burnt | | 8 | Ex 2 to 4 and Comp Ex 1 were significantly less burnt than Cadbury Product E and were not significantly different to Competitor Product H in flavour. |
| Low caramel | Competitor Products I and J | 9 | Ex 2 to 4 were significantly less caramel than Cadbury Product C and were not significantly different from Competitor Products I and J in caramel flavour. |

| **Texture** | **Priority No** | **Summary of the significant differences** |
|---|---|---|
| Fast melt rate | 2 | The results showed that there were no significant differences between Ex 2 to 4 and Comp Ex 1 in terms of melt rate in texture. |
| Crispy, crumbly | 7 | There were no significant differences between Ex 2 to 4 and Comp Ex 1 and Cadbury Product D in terms of crispy and crumbly texture. |
| Initial hardness | 7 | Ex 2 and 4 were found to be significantly less hard to bite through than Cadbury Product D and Competitor Product J. There were no significant differences between Ex 3 and Comp Ex 1 and Cadbury Product D in terms of hardness texture. |

This analysis shows that the compositions of the invention have key product attributes that have been identified as drivers in product liking. The products perform well in terms of high sweet, high milky and high vanilla, all which were considered to be high priority attributes for consumer acceptance.

Furthermore, it will be noted that replacing conventional skimmed milk powder (Comp Ex 1) with whey has no adverse effects on the listed flavour attributes.

### Effect of Sugar Content on Sensory Attributes

The sugar content of the compositions increases from Ex 2 (52.45wt%), Ex 3 (57.45wt%) to Ex 4 (62.45wt%). The variation in sugar content was analysed by testing the wafer products against the sensory attributes listed below (A = aroma, T MF = texture/mouthfeel, F = flavour, AT = aftertaste).

The sugar content was found to have a significant impact (√√) on the perception of that attribute (confidence of P<0.05) or to have some influence (√) on the level of perception of that attribute (confidence of 0.1>P>0.05).

| | Sugar content |
|---|---|
| A Overall aroma | |
| A Sweet | |
| A Milky | √√ |
| A Vanilla | |
| A Burnt | |
| T MF Hard | |
| T MF Adhesive | |
| T MF Mouthcoatinq | √ |
| F Cocoa | √ |
| F Sweet | √√ |
| F Bitter | √√ |
| F Bumt | √ |
| F Vanilla | √√ |
| F Stale | |
| AT Overall Aftertaste | |
| AT Cocoa | √ |
| AT Sweet | √√ |
| AT Bitter | √√ |
| AT Burnt | √ |
| AT Vanilla | √√ |

Hence it can be seen that the sugar content has particular influence in terms of the key attributes of milky, sweet and vanilla. Hence the composition with the highest sugar content (Ex 4) is considered to be particularly beneficial when these attributes are required.

## Claims

1. A chocolate composition comprising 50-65wt% sweetener, 25-30wt% cocoa butter substitute (CBS) and/or cocoa butter equivalent (CBE), 4-10wt% non-fat cocoa solids, milk solids and from 0-2wt% cocoa butter, wherein at least 80wt% of the milk solids are constituted by whey, and wherein the whey is not whey permeate.

2. The composition of claim 1, wherein the whey comprises at least 25wt% whey protein.

3. The composition of claim 1 or claim 2, wherein 100wt% of the milk solids are constituted by the whey.

4. The composition of any one of the preceding claims, comprising from 5 to 25wt% whey.

5. The composition of any one of the preceding claims, wherein the CBS is a lauric-based cocoa butter substitute.

6. The composition of any one of claims 1 to 5, wherein the CBS is a non-lauric based cocoa butter substitute.

7. The composition of any one of the preceding claims, comprising 50-55wt% sweetener, 25-30wt% cocoa butter substitute, 10-15wt% demineralised whey, 4-8wt% non-fat cocoa solids and 0-2wt% cocoa butter.

8. The composition of any one of claims 1 to 6, comprising 50-70wt% sweetener, 25-30wt% cocoa butter substitute, 5-15wt% demineralised whey, 4-8wt% non-fat cocoa solids and 0-2wt% cocoa butter.

9. A snack bar comprising a wafer centre and a coating comprising the composition of any one of the preceding claims.

10. A process for the manufacture of the chocolate composition of any one of claims 1 to 8 comprising
mixing at least 50-65wt% of a sweetener, 25-30wt% of a cocoa butter substitute and/or a cocoa butter equivalent, 4-10wt% non-fat cocoa solids and milk solids to form a paste, and
processing the paste to form the chocolate composition;
wherein at least 80wt% of the milk solids are constituted by whey, and wherein the whey is not whey permeate.

11. The process of claim 10, wherein the processing comprises the steps of adjusting the particle size of the paste to a predetermined range; and liquefying the paste whereby to effect flavour development.

## Revendications

1. Composition de chocolat comprenant de 50 à 65% en poids d'édulcorant, de 25 à 30% en poids de succédané de beurre de cacao (CBS) et/ou d'équivalent de beurre de cacao (CBE), de 4 à 10% en poids de matières solides de cacao non grasses, de matières solides du lait et de 0 à 2% en poids de beurre de cacao, au moins 80% en poids des matières solides du lait étant constitués par du lactosérum et le lactosérum n'étant pas du perméate de lactosérum.

2. Composition selon la revendication 1, dans laquelle le lactosérum comprend au moins 25% en poids de protéines de lactosérum.

3. Composition selon la revendication 1 ou la revendication 2, dans laquelle 100% en poids des matières solides du lait sont constitués par le lactosérum.

4. Composition selon l'une quelconque des revendications précédentes, comprenant de 5 à 25% en poids de lactosérum.

5. Composition selon l'une quelconque des revendications précédentes, dans laquelle le CBS est un succédané de beurre de cacao à base d'acide laurique.

6. Composition selon l'une quelconque des revendications 1 à 5, dans laquelle le CBS est un succédané de beurre de cacao qui n'est pas à base d'acide laurique.

7. Composition selon l'une quelconque des revendications précédentes, comprenant de 50 à 55% en poids d'édulcorant, de 25 à 30% en poids de succédané de beurre de cacao, de 10 à 15% en poids de lactosérum déminéralisé, de 4 à 8% en poids de matières solides de cacao non grasses et de 0 à 2% en poids de beurre de cacao.

8. Composition selon l'une quelconque des revendications 1 à 6, comprenant de 50 à 70% en poids d'édulcorant, de 25 à 30% en poids de succédané de beurre de cacao, de 5 à 15% en poids de lactosérum déminéralisé, de 4 à 8% en poids de matières solides de cacao non grasses et de 0 à 2% en poids de beurre de cacao.

9. Collation en barre comprenant une gaufrette centrale et un enrobage comprenant la composition selon l'une quelconque des revendications précédentes.

10. Procédé de fabrication de la composition de chocolat selon l'une quelconque des revendications 1 à 8, comprenant
le mélange d'au moins 50 à 65% en poids d'édulcorant, 25 à 30% en poids de succédané de beurre de cacao et/ou d'équivalent de beurre de cacao, 4 à 10% en poids de matières solides de cacao non grasses et de matières solides du lait pour former une pâte et
le traitement de la pâte pour former la composition de chocolat;
au moins 80% en poids des matières solides du lait étant constitués par du lactosérum et le lactosérum n'étant pas du perméate de lactosérum.

11. Procédé selon la revendication 10, dans lequel le traitement comprend les étapes consistant à ajuster la granulométrie de la pâte à une gamme prédéterminée; et liquéfier la pâte, afin de développer les arômes.

## Patentansprüche

1. Schokoladezusammensetzung umfassend 50-65 Gew.-% Süßungsmittel, 25-30 Gew.-% Kakaobutterersatzstoff (KBE) und/oder Kakaobutteräquivalent (KBÄ), 4-10 Gew.-% fettfreie Kakaofeststoffe, Milchfeststoffe und 0-2 Gew.-% Kakaobutter, wobei mindestens 80 Gew.-% der Milchfeststoffe aus Molke bestehen und wobei die Molke kein Molkepermeat ist.

2. Zusammensetzung nach Anspruch 1, wobei die Molke mindestens 25 Gew.-% Molkeprotein umfasst.

3. Zusammensetzung nach Anspruch 1 oder Anspruch 2, wobei 100 Gew.-% der Milchfeststoffe aus Molke bestehen.

4. Zusammensetzung nach einem der vorhergehenden Ansprüche, unfassend 5 bis 25 Gew.-% Molke.

5. Zusammensetzung nach einem der vorhergehenden Ansprüche, wobei der KBE ein Kakaobutterersatzstoff auf der Basis von Laurinsäure ist.

6. Zusammensetzung nach einem der Ansprüche 1 bis 5, wobei der KBE ein Kakaobutterersatzstoff, der nicht auf Laurinsäure basiert, ist.

7. Zusammensetzung nach einem der vorhergehenden Ansprüche, umfassend 50-55 Gew.-% Süßungsmittel, 25-30 Gew.-% Kakaobutterersatzstoff, 10-15 Gew.-% entmineralisierte Molke, 4-8 Gew.-% fettfreie Kakaofeststoffe und 0-2 Gew.-% Kakaobutter.

8. Zusammensetzung nach einem der Ansprüche 1 bis 6, umfassend 50-70 Gew.-% Süßungsmittel, 25-30 Gew.-% Kakaobutterersatzstoff, 5-15 Gew.-% entmineralisierte Molke, 4-8 Gew.-% fettfreie Kakaofeststoffe und 0-2 Gew.-% Kakaobutter.

9. Snackriegel umfassend eine Waffelmitte und eine Beschichtung, die die Zusammensetzung nach einem der vorhergehenden Ansprüche umfasst.

10. Verfahren zur Herstellung der Schokoladezusammensetzung nach einem der Ansprüche 1 bis 8, umfassend
das Mischen von mindestens 50-65 Gew.-% eines Süßungsmittel, 25-30 Gew.-% eines Kakaobutterersatzstoffs und/oder eines Kakaobutteräquivalents, 4-10 Gew.-% fettfreier Kakaofeststoffe und von Milchfeststoffen, um eine Paste zu bilden, und
das Verarbeiten der Paste, um die Schokoladezusammensetzung zu bilden;
wobei mindestens 80 Gew.-% der Milchfeststoffe aus Molke bestehen und wobei die Molke kein Molkepermeat ist.

11. Verfahren nach Anspruch 10, wobei das Verarbeiten die Schritte umfasst des Einstellens der Teilchengröße der Paste auf einen vorbestimmten Bereich; und das Verflüssigen der Paste, um dadurch eine Geschmacksentwicklung zu bewirken.
